# EUROPEAN PATENT APPLICATION

(11) **EP 2 779 077 A1**
(43) Date of publication of application: **17.09.2014**
(21) Application number: 14159537.1
(22) Date of filing: 13.03.2014
(51) Int. Cl.: G06Q 30/02

(54) **Attribute-based-categorical-popularity-assignment apparatus and method**

(30) Priority: 15.03.2013 US 201313840580
(71) Applicant: Wal-Mart Stores, Inc., Bentonville, AR 72716 (US)
(72) Inventor: Taank, Sumit, Bentonville, AR 72716 (US)
(74) Representative: Brandon, Paul Laurence

(57) **Abstract**

A system is disclosed for determining the popularity of elements within categorized data according to a category to which they pertain based on the popularity of element attributes. The categorized data may be a list of products, where the elements may be products classified by product categories and the attributes may be brand names. Key words may be associated with such brands and/or their products. The key words may be words used when referring to the brands and/or their products with respect to their product category. These key words may be applied to additional data from an external source providing an on-line service, where service user-text is recorded in the additional data. Popularity scores may then be assigned to the products based on indications of references to the brands and/or their products, with respect to their product category, derived from the application of the key words to the additional data.

## Description

### FIELD OF THE INVENTION

This invention relates to sorting elements in a data set and more particularly to systems and methods for ranking elements within categorized data in response to the selection of a category to which those elements pertain.

### BACKGROUND OF THE INVENTION

Data within a data store may commonly be arranged according to categories. A user of such a data store interfaces with the data store by selecting a category of interest. Elements within the category of interest may then be retrieved for review and selection by the user. However, the number of elements retrieved may be large and unwieldy, resulting in various sorting methods to assist in the process of review and selection.

One common example is a data set of products categorized by product type and offered to a user in an e-commerce environment. To assist the user in reviewing and/or selecting one or more products from the product category of interest, the products pertaining to the category may be pre-sorted for display to the user. Current approaches to sorting, however, suffer from a variety of limitations, such as, but not limited to, the metrics by which products are sorted and a reliance on data associated with the elements in the categorized data set, such as product price. Similar limitations more generally apply to other current approaches to interfacing with categorized data sets. Removal of such limitations would allow latent benefits existing at the point of interaction between users and categorized data to be harnessed.

### SUMMARY OF THE INVENTION

According to the present invention in a first aspect, there is provided a product popularity determination system comprising: a categorized data store having categorized data that classifies products from various brands according to various product categories; an additional data store having additional data collected from an external source, the additional data recording words employed by users of a service provided by the external source; and a popularity-score assignment module operable to assign popularity scores to products within a particular product category according to brand popularity based on qualifying indicators of references in the additional data to brands of products within the particular product category, the references directed to the particular product category.

Suitably, the system further comprises a ranking module operable to rank products within the particular product category according to the popularity scores assigned to the products relative to the particular product category by the popularity-score assignment module.

Suitably, the system further comprises a category selection module, the category selection module operable to select a product category from the categorized data to become the particular product category, the popularity-score assignment module operable to assign popularity scores to products within the particular product category.

Suitably, the system further comprises a key-word module, the key-word module configured to provision a key-word set to a product in the particular product category, the key-word set comprising at least one key-word pattern associated with a reference to a brand of a corresponding product in the particular product category in a context directed to the particular product category, wherein a direct reference to the product implies a brand reference.

Suitably, the system further comprises a popularity extrapolation module operable to: apply at least one key-word pattern from a key-word set pertaining to a product in the particular product category to words recorded in the additional data; and determine a number of qualifying indicators of references to a brand of the product in a context directed to the particular product category based on application of the at least one key-word pattern for multiple products in the particular product category, the references indicative of brand popularity relative to the product category.

Suitably, the system further comprises a filtering module operable to filter outlying results suggested by a key-word pattern out of a number of qualifying indicators.

Suitably, the service provided by the external source is a search engine; the additional data comprises data about search volumes for on-line searches; and the popularity extrapolation module derives the number of qualifying indicators from at least one of a search volume for a key-word pattern of the key-word set and at least one search volume for key words related to the key-word pattern.

Suitably, the filtering module is further operable to filter extraneous results out of a number of qualifying indicators by excluding at least one of search volumes above an upper threshold and search volumes below a lower threshold for purposes of determining the number of qualifying indicators.

Suitably, the popularity extrapolation module is operable to derive a qualifying indicator where key words from the key-word set are found within a predefined number of words among the words recorded in the additional data; and the filtering module is further operable to filter extraneous results out of a number of qualifying indicators by excluding instances where the key words are found outside the predefined number of words.

Suitably, the additional data comprises a data set from at least one of a microblogging service, a social networking service, and a message board service.

Suitably, the system further comprises combination module operable to combine qualifying indicators from multiple data subsets within the additional data by applying a weighting coefficient to qualifying indicators of a data subset, where one data subset differs from another.

According to the present invention in a second aspect, there is provided a system for ranking elements within a category by attribute popularity comprising: a categorized data store having categorized data structured to indicate that multiple elements, each with an attribute of interest, pertain to a category; an additional data store having additional data collected from an external source, the additional data recording words employed by users of a service provided by the external source; a popularity-score assignment module operable to communicate with the categorized data store and the additional data store to assign a popularity score to the attribute of interest of each of the multiple elements; a key-word module operable to assign a key-word set to the attribute of interest of individual elements of the multiple elements, a key-word set suggesting inclusion of a related element in the category; a popularity extrapolation module operable to apply at least one key word from a key-word set to the recorded words of the additional data to determine a number of qualifying indicators of references to the attribute of interest of an element in a context directed to the category for each of the multiple elements, the references indicative of a popularity of an attribute of interest, so that the popularity-score assignment module may assign popularity scores.

Suitably, the system further comprises a ranking module, the ranking module configured to rank the multiple elements according to a popularity-score assigned to the attribute of interest of individual elements of the multiple elements by the popularity-score assignment module.

Suitably, the category is a product category; an attribute of interest is a brand of products; and an element is a product of a brand, product pertaining to the product category.

Suitably, a key-word set comprises multiple key-word patterns associated with the attribute of interest of an element that pertains to the category; key words in a key-word pattern stand in a relationship to one another defined by at least one of word order and Boolean logic; and applying at least one key word from a key-word set to the recorded words of the additional data further comprises determining a number of qualifying indicators of references to the attribute of interest of the element in the context directed to the category based on instances of the key words within the key-word pattern standing in the relationship to one another.

Suitably, the system further comprises a combination module operable to combine qualifying indicators from multiple data subsets pertaining to the additional data by weighting qualifying indicators from an individual data subset according to a manner in which the individual data subset was compiled.

According to the present invention in a third aspect, there is provided a method for ranking products in a product category by brand popularity comprising: selecting a particular product category from categorized data; provisioning one of multiple key-word sets to a brand for each of multiple brands with corresponding products in the particular product category, a key-word set comprising at least one key word indicating that a brand to which it is provisioned has at least one product in the particular product category; applying at least one key-word from a key-word set for each of the multiple brands to additional data; retrieving one of multiple numbers of qualifying indicators from the additional data for each of the multiple brands, a number of qualifying indicators quantifying key-word based references to a brand in terms of a product of the brand in the particular product category, the qualifying indicators indicative of relative popularities of the multiple brands; assigning a reference based popularity score to each of the multiple brands; and ranking multiple products in the particular product category according to popularity scores of each brand of the multiple brands.

Suitably, the method further comprises acquiring the additional data from at least one external source that records words employed by users of at least one on-line service maintained by a corresponding external source, where the at least one on-line service comprises at least one of a search engine service, a microblogging service, a social networking service, and a message board service.

Suitably, the method further comprises returning the corresponding products of the multiple brands to a Graphical User Interface (GUI) as ranked according the popularity score of individual brands of the multiple brands for display to a user selecting the particular product category over the GUI from the categories of products in the categorized data.

Suitably, the method further comprises filtering out noise in qualified indicators by taking a log of a number of qualifying indicators for at least one brand of the multiple brands.

### BRIEF DESCRIPTION OF THE DRAWINGS

In order that the advantages of the invention will be readily understood, a more particular description of the invention briefly described above will be rendered by reference to specific embodiments illustrated in the appended drawings. Understanding that these drawings depict only typical embodiments of the invention and are not therefore to be considered limiting of its scope, the invention will be described an explained with additional specificity and detail through use of the accompanying drawings, in which:
Figure 1 is a schematic block diagram of one embodiment of a system in accordance with the present invention;
Figure 2 is a schematic block diagram of one embodiment of categorized data within a categorized data store in accordance with the present invention;
Figure 3 is a schematic block diagram of an interaction between categorized data and a category selection module of a popularity-score assignment module in accordance with the present invention;
Figure 4 is a schematic block diagram of a particular category of elements from categorized data, together with an exploded view of constituents of a key-word set associated with an element in accordance with the present invention;
Figure 5 is a schematic block diagram of an application of a key-word pattern form a key-word set to additional data by a popularity-extrapolation module of a popularity-score assignment module, where the additional data comprises multiple data subsets, in accordance with the present invention;
Figure 6 is a schematic block diagram of an application of a key-word pattern form a key-word set to additional data by a popularity extrapolation module, where the qualifying indicators comprise instances of key words from the key-word pattern within the additional data being located within a predefined number of words from one another, in accordance with the present invention;
Figure 7 is a schematic block diagram of an application of a key-word pattern form a key-word set to additional data by a popularity-extrapolation module, where the additional data comprises search volumes compiled by an external source providing a search engine service, in accordance with the present invention;
Figure 8 is a schematic block diagram of interactions between a data filtering module and additional data, comprising search volumes, in accordance with the present invention;
Figure 9 is a schematic block diagram of assignment of popularity scores to elements in categorized data in accordance with the present invention;
Figure 10 is a schematic block diagram of a method in accordance with the present invention; and
Figure 11 is a schematic block diagram of details of an additional method in accordance with the present invention.

### DETAILED DESCRIPTION

It will be readily understood that the components of the present invention, as generally described and illustrated in the Figures herein, could be arranged and designed in a wide variety of different configurations. Thus, the following more detailed description of the embodiments of the inventions, as represented in the Figures, is not intended to limit the scope of the invention, as claimed, but is merely representative of certain examples of presently contemplated embodiments in accordance with the inventions. The presently described embodiments will be best understood by reference to the drawings, wherein like parts are designated by like numerals throughout.

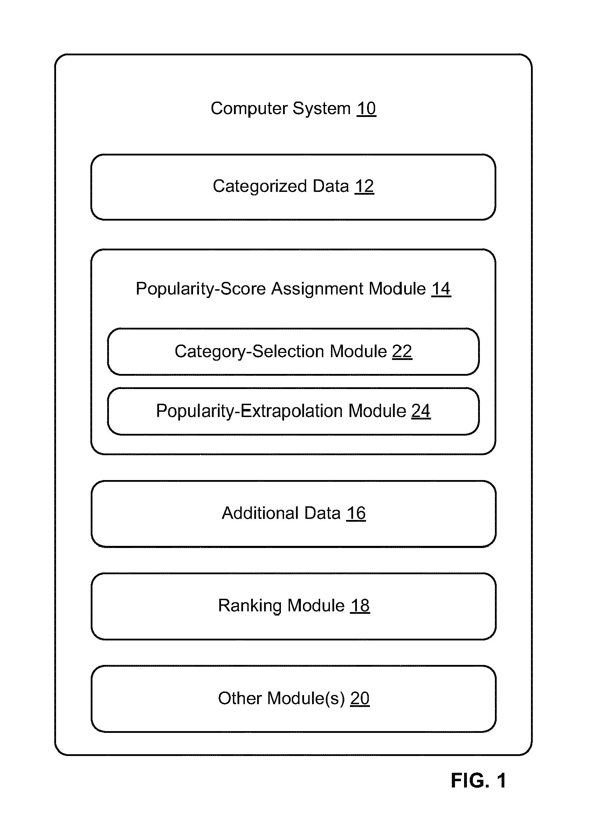

Referring to Figure 1, a computer system 10 in accordance with the present invention may provide improved searching and/or sorting. In selected embodiments, a computer system 10 may accomplish this through the use of popularity information. For example, since the most popular products may also be the most likely products that a user would be interested in, sorting by popularity for many situations is a helpful metric by which to sort products for the user. Sorting based on popularity may also be helpful to a party maintaining categorized data, such as a retailer. As opposed to an approach to product sorting based on price, for example, where a user may first be confronted with the cheapest items, an approach to product sorting based on popularity may first present a user with products that are not only more likely to appeal to the user, but may also command a higher price, resulting in greater sales revenue.

Product suppliers invest large amounts of capital and effort into improving the popularity of their band to increase the popularity of their products. Hence, consumers associate products with the brands under which they are sold. The brand of a product, therefore, may serve as an effective attribute of the product by which to determine its popularity. However, the popularity of a brand of consumer products may vary greatly from one product category to another. For example, although a common brand may make a product, or products, within the product category of television sets that may be relatively unknown or unpopular, the same brand may make another product, or products in another product category, such as video gaming counsels that may be among the most popular within the product category.

Although a list of products may readily be ordered according to product category, and details and/or attributes, such as product brand, may be associated with such products, popularity information is more difficult to ascertain, compile, and associate with the various elements of a product list. Although various estimates may be used to estimate popularity, such as prior sales on a given website to which the product list pertains, such metrics suffer from various limitations, from small sample sizes to poor sensitivity to evolving trends. Furthermore, the task is complicated by the number of products and product categories commonly included within the product lists used by on-line retailers. Even if accurate popularity information could be acquired for the various brands-since brands can serve as surrogates for the popularity of their respective products for reasons discussed above-the additional complication of the popularity of products from a common brand varying within different product categories remains.

Therefore, it is desirable to tap into larger more responsive measures of popularity. The use of a single brand as a surrogate for several products, acting as an attribute of interest, may simplify the problem. However, to avoid problems discussed above, the popularity of the brand needs to be obtained with respect to a product category for which the brand produces corresponding products. In other words, multiple different popularities may be determined for a single brand for assignment to products with respect to the various product categories within which the brand provides products. In selected embodiments, a computer system 10 in accordance with the present invention may process, characterize, sort, or otherwise handle categorized data 12 from a categorized data store by means of a popularity-score-assignment module 14. For example, a popularity-score-assignment module 14 may sort the categorized data 12 based on information acquired by the popularity-score-assignment module 14 from additional data 16 in an additional data store. Once the popularity-score-assignment module 14 has assigned popularity scores to the elements within a category from the categorized data 12, a ranking module 18 may rank the elements with respect to their category according to the popularity scores. Other module(s) 20 may provide additional functionality to facilitate sorting of the categorized data.

A popularity-score-assignment module 14 may assign popularity scores for elements in a category selected by a category-selection module 22. A category-selection module 22 may also perform additional functions discussed below. Additionally, a popularity-extrapolation module 24 may detect, within the additional data, qualifying indicators of references to attributes of interest related to elements in a context directed to the selected category. Based on qualifying indicators of such references, a popularity-score assignment module 14 may assign popularity scores to the elements within the selected category.

The categorized data 12 in a categorized data store may comprise categorized data 12 structured to indicate that multiple elements pertain to a category. One or more elements pertaining to a category in the categorized data 12 may be distinguished from one another by one or more attributes. One or more attributes of a given element may be selected as an attribute of interest to which a popularity score may be assigned, and/or the popularity score may be assigned to the element to which the one or more attributes of interest pertain. Similarly, a popularity score may be assigned by the popularity-score assignment module 14 with reference to each of multiple elements in a selected category from the categorized data 12.

In certain embodiments, a categorized data store 12 may comprise a list of products. Such products may be consumer products or any other type of products. The products may be categorized by type of product, product category, or consumer product category. In such embodiments, an attribute of interest may be a brand of products and an element may be a product or product category corresponding to a brand. Accordingly, the categorized data 12 may classify products from various brands according to various product categories.

A popularity-score assignment module 14 may tap into one or more large, relatively responsive measures of popularity. Generally speaking, a popularity-score assignment module 14 may assign a popularity score to one or more attributes of interest pertaining to an element, and/or to the element with respect to the category to which the element pertains. A popularity-score assignment module 14 may assign multiple popularity scores such that multiple elements in a given category have corresponding popularity scores. Multiple popularity scores may be assigned in this way so that all, or just a portion, of the elements in the given category have a corresponding popularity score, depending on the embodiment. Furthermore, a popularity-score assignment module 14 may assign popularity scores with respect to multiple categories within the categorized data 12. The multiple categories may cover all categories in the categorized data, or a portion of the categories, depending on the embodiment.

Returning to embodiments consistent with the non-limiting example of categorized data 12 comprising a list of products where the attributes of interest corresponds to product brands, a popularity-score assignment module 14 may also make such assignments. A popularity-score assignment module 14 may assign a popularity score to products within a particular consumer product category according to brand popularity based on qualifying indicators of references in additional data 16 to brands of products within the particular consumer product category. Such references may be directed to the particular consumer product category so that the popularity scores are product-category sensitive.

Again, a popularity-score assignment module 14 may assign multiple popularity scores with respect to multiple brands and/or products in relation to the given category, whether to all products or a portion thereof. Also, a popularity-score assignment module 14 may assign multiple popularity scores with respect to multiple product categories, whether with respect to all or a portion thereof, from the list of products.

To generate timely, relevant, accurate, and optimal popularity scores, a popularity-score assignment module 14 may tap into larger more responsive measures of popularity in terms of the additional data 16 in the additional data store. Therefore, a popularity-score assignment module 14 may communicate with a categorized data store to select the subjects to which it assigns category-sensitive popularity scores. A popularity-score assignment module 14 may also communicate with an additional data store to acquire the information the popularity-score assignment module 14 needs to assign a popularity score to the attribute of interest of each of the multiple elements in a given category.

Additional data 16 may comprise additional data collected from a source external to the categorized data 12. Many services provided by external sources collects such data, from which popularity scores may be extracted. Such services may record words employed by users of a service provided by the external source, which may be reflective of the popularity of an attribute of interest. Furthermore, such additional data 16 may provide context indicative of the category for a given reference to an attribute of interest, so that category-sensitive popularity scores may be determined.

Any number of examples of such services collecting the additional data 12 may be provided. By way of example and not limitation, some non-limiting examples of such services may include search engine services, microblogging services, social networking services, and message board services. Particular, non-limiting examples of such services and/or derivative products may include: GOOGLE ADWORDS and GOOGLE TRENDS, with respect to search engine services; TWITTER, with respect to microblogging services; and FACEBOOK, with respect to social networking services. Additional, non-limiting details about the interaction between the popularity-score assignment module 14 and additional data 12 derived from such services are discussed below.

Once category-sensitive popularity scores have been assigned to various attributes of interest, elements, brands, and/or products, a ranking module 18 may provide ranking functionality. A ranking module 18 may rank multiple elements according to a popularity score assigned to the attribute of interest of each the multiple elements and/or the elements themselves by a popularity-score assignment module 14. In embodiments where the categorized data 12 comprises a list of products, a ranking module 18 may rank products within a particular consumer product category according to the popularity scores assigned to the products, in terms of their brands, relative to the particular consumer product category.

A computer system 10 may also comprise one or more additional modules 20 to facilitate the sorting and/or delivery of responsive data where a user interfaces with the categorized data 12. By way of one non-limiting example, an interface module (not shown) may allow a user to select a particular product category over a Graphical User Interface (GUI) from the categories of consumer products in the categorized data. The interface module may also return the corresponding products of the multiple brands to a Graphical User Interface (GUI) as ranked according to the popularity score of each brand of the multiple brands for display to a user. By way of another nonlimiting example, an additional-data retrieval module (not shown) may be operable to retrieve, receive, and prepare the additional data 16 to be accessed by the popularity-score assignment module.

Embodiments in accordance with the present invention may be embodied as an apparatus (system), method, or computer program product. Accordingly, the present invention may take the form of an entirely hardware embodiment, an entirely software embodiment (including firmware, resident software, micro-code, etc.), or an embodiment combining software and hardware aspects that may all generally be referred to herein as a "module" or "system." Furthermore, the present invention may take the form of a computer program product embodied in any tangible medium of expression having computer-usable program code embodied in the medium.

Any combination of one or more computer-usable or computer-readable media may be utilized. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. In selected embodiments, a computer-readable medium may comprise any non-transitory medium that may contain, store, communicate, propagate, or transport the program for use by or in connection with the instruction execution system, apparatus, or device.

Computer program code for carrying out operations of the present invention may be written in any combination of one or more programming languages, including an object-oriented programming language such as Java, Smalltalk, C++, or the like and conventional procedural programming languages, such as the "C" programming language or similar programming languages. The program code (e.g., code corresponding to a popularity-score module 14, popularity extrapolation module 24, or the like, or a combination thereof) may execute entirely on a mobile computing device, partly on a mobile computing device, as a stand-alone software package, on a stand-alone hardware unit, partly on a point of sale (POS) computer, or partly on a remote computer or server. In the latter scenario, a remote computer may be connected to a mobile computing device, a POS or other on-site computer, or a combination thereof through any type of network, including a local area network (LAN) or wide area network (WAN), or the connection may be made to an external computer (e.g., through the Internet using an Internet Service Provider).

Embodiments may also be implemented in cloud computing environments. In this description and the following claims, "cloud computing" is defined as a model for enabling ubiquitous, convenient, on-demand network access to a shared pool of configurable computing resources (e.g., networks, servers, storage, applications, and services) that may be rapidly provisioned via virtualization and released with minimal management effort or service provider interaction, and then called accordingly. A cloud model may be composed of various characteristics (e.g., on-demand self-service, broad network access, resource pooling, rapid elasticity, measured service, etc.), service models (e.g., Software as a Service ("SaaS"), Platform as a Service (PaaA"), Infrastructure as a Service ("IaaS"), and deployment models (e.g., private cloud, community cloud, public cloud, hybrid cloud, etc.).

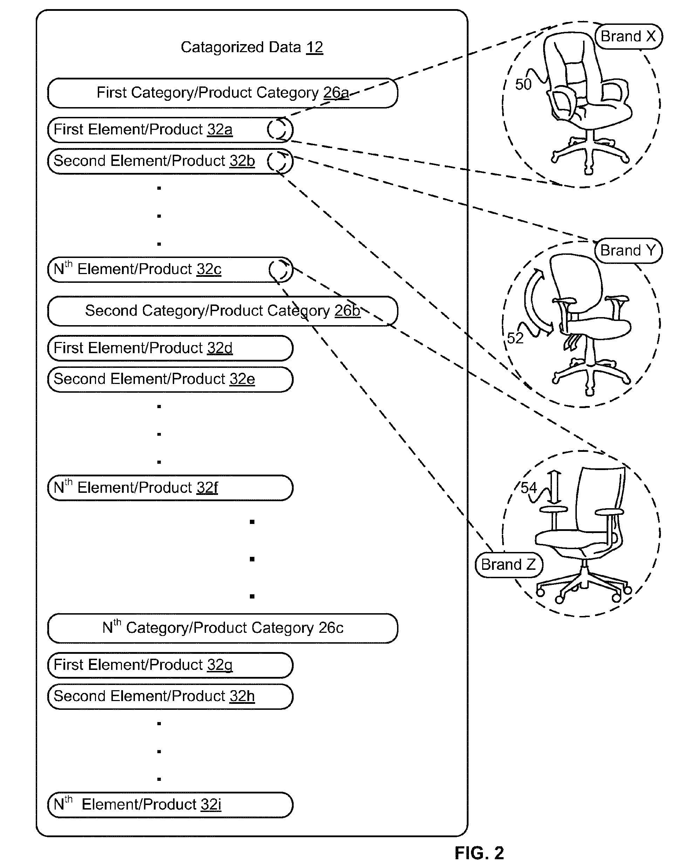

Referring to Figure 2, categorized data 12 within a categorized data store may include any number of categories or product categories 26, where the categorized data 12 is a list of products. Although multiple categories/product categories 26 (e.g., first category/product category 26a, second category/product category 26b, etc.) are depicted in Figure 2, in some embodiments, the categorized data 12 may be made up of a single category/product category 26. Multiple elements/products 32 (e.g., first elements/product 32a, second element/product 32b, etc.) may be classified according to the various categories/product categories 26 of the categorized data 12.

A first category/product category 26a may provide an example for purposes of illustration. Although the first category/product category 26a is depicted with three elements/products 32a, 32b, 32c, any number of elements/products 32 may pertain to the first category/product category 26a. In the example, the first category/product category 26a may be office chairs. The elements 32 in this category may each be a different office chair. The attribute of interest for the first element 32a may be a high back 50, such that the first element 32a is a high-back office chair. With respect to a second element 32b, the element of interest may be an adjustable back 52. Adjustable arm rests 56 may be the attribute of interest for an N^{th} element 32c.

In an alternative embodiment, where the categorized data 12 is a list of products, the attributes of interest may correspond to the brands of the various products 32. In such an example, a first product 32a of a first product category 26a may be an office chair of brand X. A second product 32b may be an office chair of brand Y, and an N^{th} product 32c may be an office chair of brand Z.

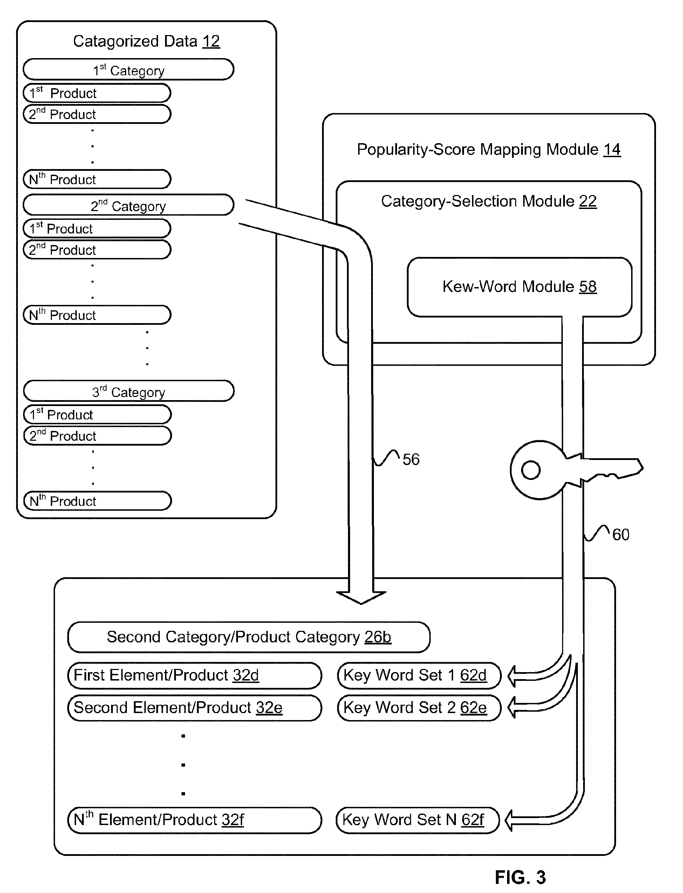

Referring to Figure 3, a category selection module 22, which may be in communication with a popularity-score assignment module 14, may select 56 a category/product category 26 from the categorized data 12. The selected category/product category 26 may become the particular product category on which the popularity-score mapping module 14 may focus to assign popularity scores to elements/products 32 within the particular product category 26. In certain embodiments, a category-selection module 22 may select multiple categories/product categories for a popularity-score assignment module 14 to assign popularity scores in parallel. In the example depicted in Figure 3, a category-selection module 22 selects the second category/product category 26b from the categorized data 12.

A key-word module 58, which may be in communication with a category-selection module 22, may provision 60 key-word sets 62 (e.g., a first key-word set 62d, second key-word set 62e, etc.) to the elements/products 32d, 32e, 32f in the second category/product category 26b. Additionally, or in the alternative, a key-word module 58 may assign a key-word set 62 to the attribute of interest of each of the multiple elements. One or more key-words in the key-word set 62 may suggest inclusion of a related element/product 32 in the selected category 26b.

As a result, a first key-word set 62d may be associated with a first element/product 32d of the second category/product category 26b. A second key-word set 62e may be associated with a second element/product 32e, and an N^{th} key-word set 62f may be associated with an N^{th} element/product 32f. One or more key-word patterns within a key-word set 62 may be applied to the additional data 16 to determine popularity scores for the corresponding elements/products 32 in terms of their attributes of interest.

A key-word module 58 may generate one or more key words and/or key-word patterns based on terms in the categorized data 12 associated with a selected category/product category 26a. Suitable key words may include element names, product terms, attributes of interest, brand names, additional details, or the like, or a combination or sub-combination thereof. In some embodiments, a key-word module 58 may generate terms synonymous to such terms by using a thesaurus or the like.

In certain embodiments, an administrator of a system 10 may associate additional information with one or more elements 32 for a given category/product category 26 to assist in the generation of key words. A key-word module 58 may generate the key-word sets 62 to produce qualifying indicators of references to the associated elements/products 32 in relation to the category/product category 26 to which they pertain indicative of their respective popularities in relation to the category/product category 26 to which they belong.

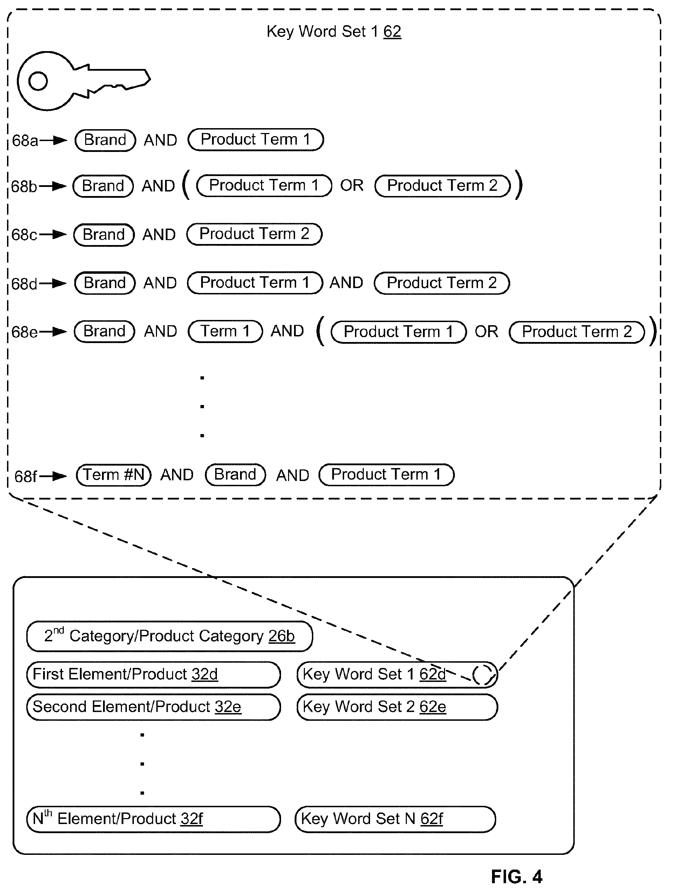

Referring to Figure 4, a key-word set 62 may comprise multiple key-word patterns 68. A first key-word set 62d corresponding to the first element/product 32d of a second category/product category 26b from the categorized data 12 is depicted by way of example. As may be appreciated from the example, a key word set 62 may comprise multiple key-word patterns 68 (e.g., a first key-word pattern 68a, second key-word pattern 68b, etc.) associated with an attribute of interest of an element that pertains to the category 26. In some circumstances, a key-word pattern 68 may be made up of a single key word.

Key words in a key-word pattern 68 may stand in a relationship to one another defined by word order, Boolean logic, and/or one or more other constraints. For example, with respect to a first key-word pattern 68a, a relationship may be defined by a name designating the attribute of interest (e.g., a brand name) preceding an element/product term (e.g., "product term 1") referring to the element/product 32. Additionally, or in the alternative, the relationship for a first key-word pattern 68a may further be defined by Boolean logic, which requires both a brand name, or attribute name, and the product 32, or element 32, to be present. In an example where the first key-word pattern 68a is defined only by Boolean logic, the order of the brand name and "product term 1" may be reversed within the relationship.

With respect to the second key-word pattern 68b, the relationship, defined in terms of Boolean logic, would require the brand name and either "product term 1," "product term 2," or both. "Product term 2" may be a synonymous term referring to the first element/product 32d. Word order may also provide an additional constraint by which to define the relationship of the second key-word pattern 68b.

All manner of different relationships may be defined for various key-word patterns 68, some additional, non-limiting examples are provided in Figure 4. With respect to the fifth key-word pattern 68e, an additional term is included, "term 1," that is neither a brand name nor a term referring to the first element/product 38. Such terms, as with attribute references/brand names and/or element/product terms, may assist in determining the popularity of the corresponding element/product 38 and/or provide additional context to relate the element/product 38 to the category/product category 28.

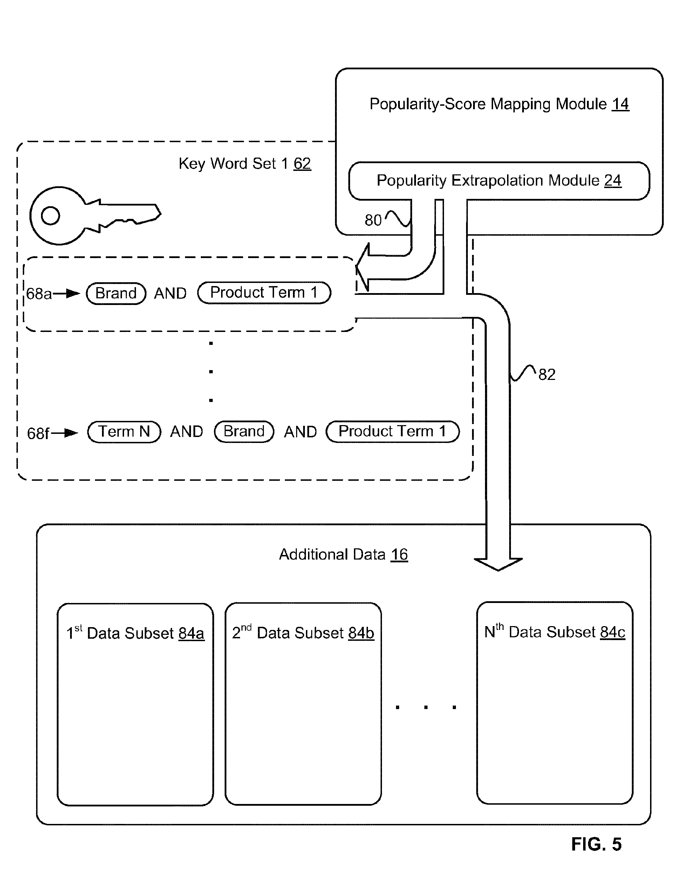

Referring to Figure 5, a popularity-extrapolation module 24, which may be in communication with the popularity-score mapping module 14, may select 80 a key-word pattern 68 from the key-word set 62 and apply 82 the key-word pattern 68 to the additional data 16. Depending on the embodiment, a popularity-extrapolation module 24 may continue to select 80 and apply 82 key-word patterns 68 to the additional data 16 to produce qualifying indicators of references to the corresponding element/product 32 in relation to the selected category 26 until all the key-word patterns 68 have been applied. In some embodiments, a popularity-extrapolation module 24 may select multiple key-word patterns 68 from a key-word set 62 to apply in parallel to the additional data 16. The additional data 16 may comprise multiple data subsets 84. Although three data subsets 84a, 84b, 84c are depicted in Figure 5, any number of data subsets 84 are possible, including a single data subset 84. A popularity-extrapolation module 24 may apply a key-word pattern 68 to each data subset 84 individually, or in parallel.

Applying 82 a key-word pattern 68, by a popularity-extrapolation module 24, may also involve determining, by the popularity-extrapolation module 24, a number of qualifying indicators of references to the attribute of interest of the element 32 in a context directed to the selected category 26. Qualifying indicators may be based on instances of the key words within the key-word pattern 68 standing in a predefined relationship to one another. Some non-limiting examples of such predefined relationships are discussed above with respect to Figure 4. The references may be indicative of a popularity of an attribute of interest, relative to the selected category 26 so that the popularity-score assignment module 14 may assign popularity scores. The popularity extrapolation module 14 may go on to similarly apply key-word sets 62 pertaining to other elements 32 in the selected category 26.

In embodiments in which the categorized data 12 comprises a list of products, a popularity-extrapolation module 24 may apply 82 at least one key-word pattern 68 from a key-word set 62 pertaining to a product 32 in the particular product category 26 to words recorded in the additional data 16. A popularity-extrapolation module 24 may also determine a number of qualifying indicators of references to a brand of the product 32 in a context directed to the particular product category 26. The number of qualifying indicators may be based on application 82 of the at least one key-word pattern 68. The references may be indicative of brand popularity relative to the product category 26.

A popularity-extrapolation module 24 may apply 82 one or more key-word patterns 62 to the additional data 16 and determine a number of qualifying indicators of references to an element 32, product 32, attribute of interest, and/or brand associated with the key-word pattern 68 in a context directed to a selected category 26, or product category 26 in a number of different ways. The way in which a popularity-extrapolation module 24 applies 82 the one or more key-word patterns 68 and determines a number of qualifying indicators may vary on a number of factors, including the external source from which the additional data 16 is obtained and/or the service of the external source in connection with which the additional data 16 is collected.

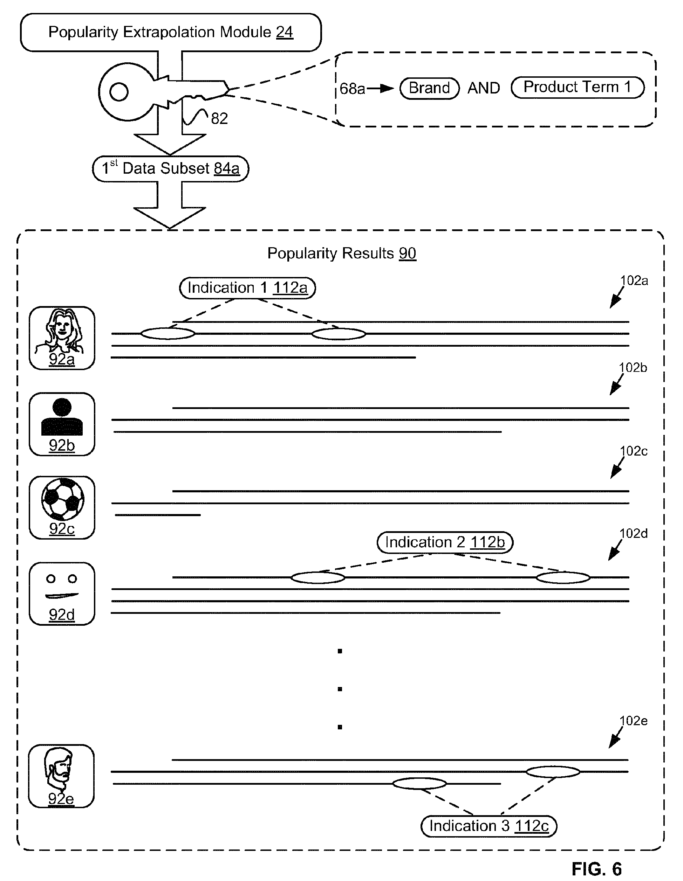

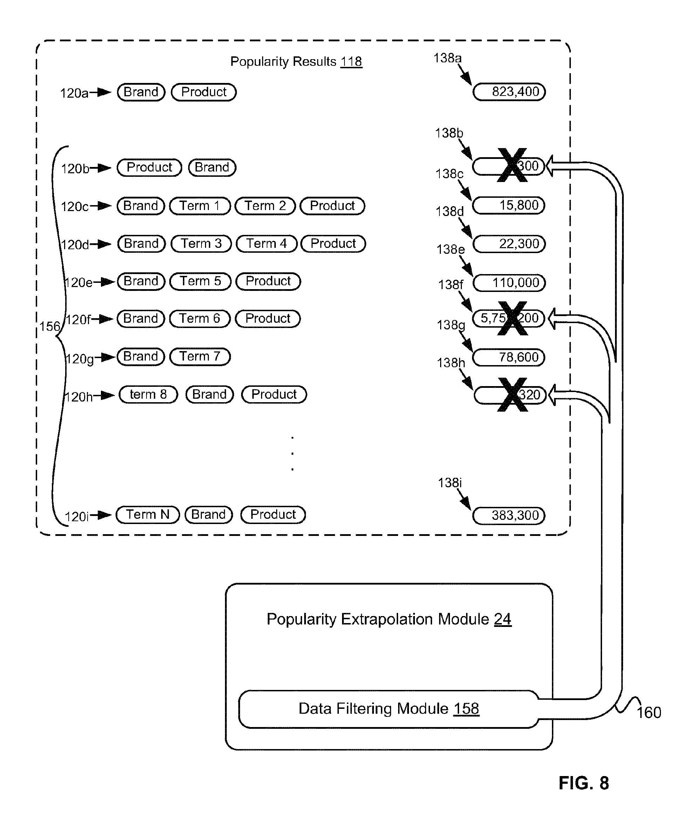

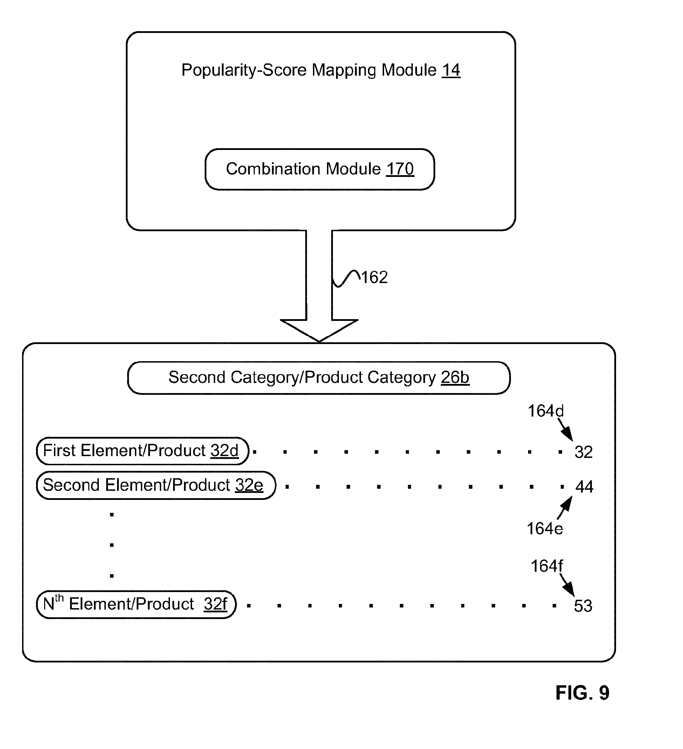

Therefore, one non-limiting example of the details for ways in which the popularity-extrapolation module 24 applies 82 a key-word pattern 68 and determines a number of qualifying indicators is provided with respect to a first data subset 84a in connection with Figure 6 below. Another non-limiting example of details for additional ways in which a popularity-extrapolation module 24 applies 82 a key-word pattern 68 and determines a number of qualifying indicators is provided with respect to a second data subset 84b in connection with Figure 8 and Figure 9 below. However, additional ways may be within the scope of the present invention.

Referring to Figure 6, a popularity-extrapolation module 24 may produce popularity results 90 by application of a key-word pattern 68a to a data subset 84a of the additional data 16. In some embodiments, a popularity-extrapolation module 24 may produce popularity results 90 by application of the key-word pattern 68 to multiple data subsets 84a, 84b, 84c, or to the additional data generally. For purposes of explanation, portions of a first data subset 84a from which the popularity results 90 may arise are depicted as they might be rendered by a browser providing the service of an external source from which the first data subset 84a may be compiled.

Words employed by users 92 of the service are recorded in the first data subset 84a. For example, a first block of text 102a comprising words and/or other characters, depicted with rows of straight lines, may be input by the first user 92a. Second, third, and fourth text blocks 102b, 102c, 102d may be input by second, third, and fourth users 92b, 92c, 92d, respectively. Similarly, an N^{th} block of text 102e may be associated with an N^{th} user 92e. Although each user 92 is associated with a single block of text 102 in the popularity results 90 depicted, an individual user 92 may be associated with multiple text blocks 102. Also, although five users 92 are depicted in Figure 6, any number of users 92 may be included in a data subset 84, or the additional data 16.

As a popularity-extrapolation module 24 applies 82 the key-word pattern 68 to the data subset 84, the popularity-extrapolation module 24 may determine a number of qualifying indicators of references to the element 32, product 32, attribute of interest, and/or brand associated with the key-word pattern 68 in a context directed to the selected category 26, or product category 26. A popularity-extrapolation module 24 may determine a qualifying indicator 112 where the relationship between key-words in the key-word pattern 68, as discussed above with respect to Figure 4, is found in text and/or words recorded in the first data subset 84a.

A first qualifying indicator 112a is found within the first text block 1 02a associated with the first user 92a. Similarly, a second qualifying indicator 112b is found in the fourth text block 102d, and a third qualifying indicator 112c is found in the N^{th} text block 102e. Although three qualifying indicators 112 are depicted, any number of qualifying indicators 112 are possible.

In some embodiments, a popularity-extrapolation module 24 may impose an additional constraint, in addition to the relationship defining the key-word pattern 68, in order for a qualifying indicator to obtain. According to this additional constraint, a popularity-extrapolation module 24 may derive a qualifying indicator 112 where key words from the key-word set 62 are found within a predefined number of words among the words recorded in the additional data 16. In some embodiments, this requirement may be the only qualification required for a qualifying indicator 112. In certain embodiment, the presence of a single key word may be sufficient to be considered a qualifying indicator 112.

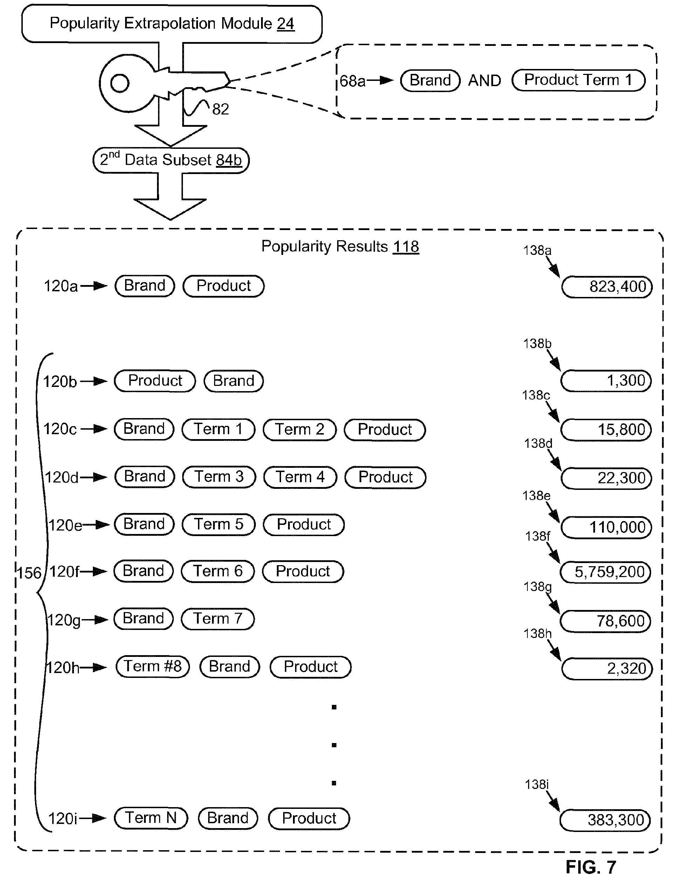

Consistent with some examples, a data set 84 may comprise data from one or more of a microblogging service, a social networking service, and a message board service. The number of references made by users 92 of such services to the element 32, product 32, attribute of interest, and/or brand associated with the key-word pattern 68 in a context directed to the selected category 26, or product category 26, as determined by the qualifying indicators 112, provides a measure of the popularity of the element 32, product 32, attribute of interest, and/or brand with respect to the selected category 26, or product category 26. As stated, the details for ways in which a popularity-extrapolation module 24 applies 82 the key-word pattern 68 and determines the number of qualifying indicators discussed with respect to Figure 6 are non-limiting. Additional non-limiting ways are discussed below with respect to Figure 7 in connection to with the second data subset 84b.

Referring to Figure 7, a popularity-extrapolation module 24 may produce popularity results 90b by application 82 of a key-word pattern 68a to the second data subset 84b of the additional data 16. The second data subset 84a may record words and/or text employed by users of a search engine service, provided by an external source. Therefore, the second data subset 84b in the additional data 16 may comprise data about search volumes for on-line searches. The record of words and/or text employed by users of the search engine in the second data subset 84b may take the form of various queries 120 indexed to search volumes 138.

In some embodiments, a popularity-extrapolation module 24 may derive the number of qualifying indicators from a matching search volume 138 indexed to a matching query 120 that matches the key-word pattern 68. A match between a matching query 120 and a key-word pattern 68 may be exact or may be more loosely constrained based on the requirements of a predefined relationship between the key words in the key-word pattern 68. In additional embodiments, a popularity-extrapolation module 24 may derive a number of qualifying indicators that include qualifying indicators from a batch 156 of related quires 120 and their associated search volumes 138.

A query 120 within the second data subset 84a, or any additional data 16, compiled from a search engine, may be linked with a batch 156 of related quires 120. An external source operating a search engine service often tracks the way in which a given query 120 is related to others 120. An external source operating a search engine service may include information about relationships and connections between queries 120 in the additional data 16 it provides.

A popularity-extrapolation module 24 may harness the connections between a given query 120 matching the key-word pattern 68 and the 156 batch of related quires 120 by including search volumes 138 indexed to the batch 156 of related quires 120 in deriving the qualified indicators. Search volumes may provide a measure of popularity because they reflect the number of on-line searches made by users of the search engine for the element 32, product 32, attribute of interest, and/or brand associated with the key-word pattern 68 in a context directed to the selected category 26, or product category 26.

Referring to Figure 8, a data-filtering module 158, which may be in communication with a popularity-extrapolation module 24, may filter 160 extraneous results. A filtering module 158 may filter 160 outlying results suggested by a key-word pattern 68 out of a number of qualifying indicators. In the example depicted, the data-filtering module 158 filters 160 the second search volume 138b, the sixth search volume 138j, and the eighth search volume 138h out of a popularity-extrapolation module's 24 derivation number of qualifying indicators. In the example depicted, the filtering module 158 excludes a search volume 138 above an upper threshold and search volumes 138 below a lower threshold for purposes of determining the number of qualifying indicators.

However, other criteria may be used for filtering out search volumes 138 and other potential qualifying indicators. For example, in some embodiments utilizing related search volumes 138 indexed to a batch 156 of related quires 120, a filtering module 158 may variously weight the search volumes 138 to avoid skewing the results. By way of an additional, non- limiting example, in embodiments consistent with details discussed with respect to Figure 6, a filtering module 158 may filter 160 extraneous results out of a number of qualifying indicators by excluding instances where the key words are found outside a predefined number of words. Once a popularity-extrapolation module 24 determines the qualifying indicators from the additional data 16, the popularity-score assignment module 14 may assign popularity scores.

Referring to Figure 9, a popularity-score assignment module 14 may assign 162 category-sensitive popularity scores 164 to the elements/products 32 of the selected category 26, or product category 26. A popularity-score assignment module 14 may assign popularity scores 164 based on numbers of qualifying indicators from the additional data 16.

In some of such examples, a popularity-score assignment module 14 may remove noise embedded in the numbers of qualifying indicators used in deriving the popularity scores 164. By way of providing a non-limiting example, in some embodiments, a popularity-score assignment module 14 may filter out noise in qualified indicators by taking a log of a number of qualifying indicators. In examples where the categorized data 12 is a list of products, the log of a number of qualifying indicators may be taken for one or more brands, or products, associated with one or more key-word sets.

In certain embodiments, a combination module 170 may be included in a system 10. A combination module 170 may be in communication with a popularity-score assignment module 14. A combination module 170 may combine qualifying indicators from multiple data subsets 84, as depicted in Figure 5, pertaining to the additional data 16.

In some embodiments, a combination module 170 may weight qualifying indicators by applying one or more weighting coefficients to qualifying indicators of one or more data subsets 84, where at least one data subset differs from another. In certain embodiments, the combination module 170 may weight a data subset according to a manner in which the data subset 84 was compiled. For example, a data subset 84 compiled in relation to a search engine service may be weighted more, or less, heavily than a data subset 84 compiled in relation to a microblogging service, depending on the relative strengths and weaknesses of the different services with respect to needs such as size of data sample, sensitivity to trends, etc.

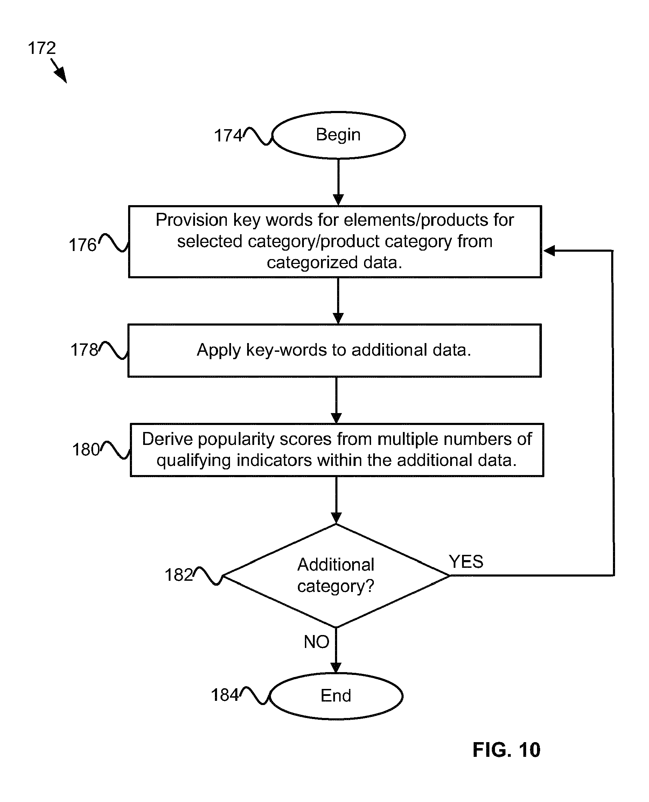

Referring to Figure 10, for purposes of illustration, the present invention is now described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, may be implemented by computer program instructions or code. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that may direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program may also be loaded onto a computer or other programmable data processing apparatus to cause a series of operation steps to be performed on the computer or other programmable apparatus to produce a computer implemented process such that the instructions which execute on the computer or other programmable apparatus provide processes for implementing the functions/acts specified in the flowchart and/or block diagram block or blocks.

A non-limiting example of a method 172 in accordance with the present invention may begin 174 by provisioning 176 key words for elements/products 32 for a selected category/product category 26 from categorized data 12. Once the key words are provisioned, they may be applied 178 to the additional data 16. Application of the key words to the additional data 16 may result in numbers of qualifying indicators within the additional data 16 that may be used to derive 180 popularity scores 164.

A decision 182 may then be made as to whether an additional category remains in the categorized data 12 that has not been sorted. If the answer to the decision is YES, the method 172 returns to provisioning 176 key words for elements/products 32 pertaining the next remaining category 26. If the answer is NO, the method 172 may end 184.

In selected embodiments of the method 172, the step of provisioning 176 key words may be proceeded by selecting a particular product category 26 from categorized data 16 comprising a list of products. Furthermore, the step of provisioning 176 may involve provisioning 176 one of multiple key-word sets 62 to a brand for each of multiple brands with corresponding products in the particular product category. In such embodiments, a key-word set 62 may comprise at least one key word indicating that a brand to which it is provisioned has at least one product in the particular product category.

The step of applying 178 may involve applying 178 at least one key-word from a key-word set 62 for each of the multiple brands to additional data 16. Consistent embodiments may also involve, before deriving 180 popularity scores 164, retrieving one of multiple numbers of qualifying indications from the additional data 16. A number of qualifying indications quantifying key-word based references to a brand in terms of a product of the brand in the particular product category may be provided for each of the multiple brands in the particular product category 26. For reasons discussed above, the qualifying indications may be indicative of relative popularities of the multiple brands. With the qualifying indicators, a reference based popularity score 164 may be assigned to each of the multiple brands. The multiple products 32 in the particular product category 26 may then be ranked according to popularity scores 164 of each brand of the multiple brands.

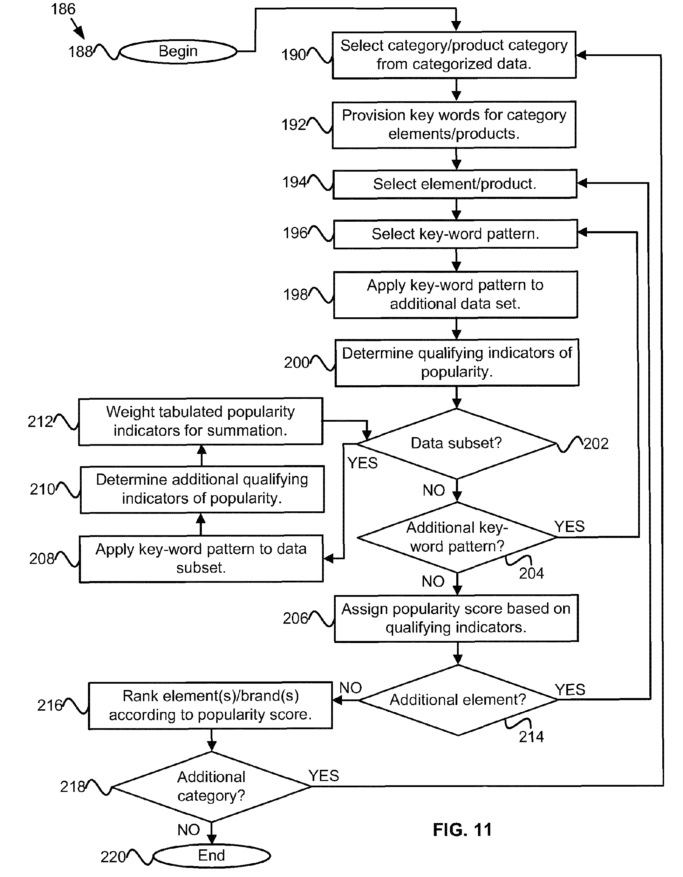

Referring to Figure 11, a non-limiting example of an additional method 186 in accordance with the present invention may begin 188 by selecting 190 a category/product category 26. After selection 190 of the category/product category 26, key-word sets 62 for elements/products 32 may be provisioned 192. An element element/product 32 from the elements/products for 32 may be selected 194.

A key-word pattern 68 from the key-word set 62 corresponding to the selected element/product 32 may be selected 196 and applied 198 to a data subset 84 in the additional data 16. Once the key-word pattern 68 has been applied 198, a determination 200 may be made of a number of qualifying indicators of references to the element 32, product 32, attribute of interest, and/or brand associated with the key-word pattern 68 in a context directed to the selected category, or product category 26.

A data determination 202 may be made as to whether there is an additional data subset 84, apart from the data subset(s) 84 to which the key-word pattern 68 was applied. If the answer is NO, a pattern determination 204 may be made as to whether there is another key-word pattern 68 in the key-word set 62. If the answer is YES, the method 186 may return to the step of selecting 196 a key-word pattern 68 from the remaining key-word patterns 68. If the answer is NO, the method 186 may proceed by a popularity score 164 may being assigned 206 to the element 32, product 32, attribute of interest, and/or brand associated with the key-word pattern 68 based on the qualifying indicators.

Returning to the data determination 202, if the answer is YES, meaning there are additional data subsets 84, the method 186 may proceed by applying 208 the first key-word pattern 68 to another data subset 84 in the additional data 16. An additional number of qualifying indicators in the additional data subset 84 may be determined 210. The additional number of qualifying indicators may be weighted, as discussed above, and summed 212 with the other qualifying indicators. Once qualifying indicators are weighted and summed 212 the method 186 may return to the data determination 202. Throughout this application, weighting can refer all manner of weighting coefficients, including 1 and 0.

If the answer to the pattern determination 204 is NO, a popularity score 164 may be assigned 206 based on the qualifying indicators. An element/product determination 214 may be made to determine if there is an additional element/product 32. If the answer is YES, the method 186 may return to the step of selecting 194 another element/product 32 from the remaining elements/products 32. If the answer is NO, the method 186 may proceed by ranking elements/products 32 according to their assigned popularity scores 164.

The method 186 may proceed with a category determination 218 as to whether there is an additional category/product category 26 in the categorized data 12. If the answer is YES, the method 186 may return to the step of selecting 190 a category 26, or product category 26. If the answer is NO, the method 186 may end 220.

In some embodiments, the method 186 may also involve acquiring additional data 16 from at least one external source. The external source may record words employed by users of at least one on-line service maintained by the corresponding external source. Some examples of such a service, provided by way of example and not limitation may include a search engine service, a microblogging service, a social networking service, and/or a message board service.

The flowchart in Figures 10 and 11 illustrates the architecture, functionality, and operation of possible implementations of systems, methods, and computer program products according to certain embodiments of the present invention. In this regard, each block in the flowcharts may represent a module, segment, or portion of code, which comprises one or more executable instructions for implementing the specified logical function(s). It will also be noted that each block of the flowcharts illustration, and combinations of blocks in the flowcharts illustration, may be implemented by special purpose hardware-based systems that perform the specified functions or acts, or combinations of special purpose hardware and computer instructions.

It should also be noted that, in some alternative implementations, the functions noted in the blocks may occur out of the order noted in the Figures. In certain embodiments, two blocks shown in succession may, in fact, be executed substantially concurrently, or the blocks may sometimes be executed in the reverse order, depending upon the functionality involved. Alternatively, certain steps or functions may be omitted if not needed.

The present invention may be embodied in other specific forms without departing from its spirit or essential characteristics. The described embodiments are to be considered in all respects only as illustrative, and not restrictive. The scope of the invention is, therefore, indicated by the appended claims, rather than by the foregoing description. All changes which come within the meaning and range of equivalency of the claims are to be embraced within their scope.

What is claimed is:

## Claims

1. A product popularity determination system (10)comprising:
a categorized data store (12) having categorized data that classifies products from various brands according to various product categories;
an additional data store (16)having additional data collected from an external source, the additional data recording words employed by users of a service provided by the external source; and
a popularity-score assignment module (14) operable to assign popularity scores to products within a particular product category according to brand popularity based on qualifying indicators of references in the additional data to brands of products within the particular product category, the references directed to the particular product category.

2. The system (10) of claim 1, further comprising a ranking module (18) operable to rank products within the particular product category according to the popularity scores assigned to the products relative to the particular product category by the popularity-score assignment module (14).

3. The system (10) of claim 1, further comprising a category selection module (22), the category selection module operable to select a product category from the categorized data to become the particular product category, the popularity-score assignment module (14) operable to assign popularity scores to products within the particular product category.

4. The system (10) of claim 1, further comprising a key-word module (58), the key-word module configured to provision a key-word set to a product in the particular product category, the key-word set comprising at least one key-word pattern associated with a reference to a brand of a corresponding product in the particular product category in a context directed to the particular product category, wherein a direct reference to the product implies a brand reference.

5. The system (10) of claim 1, further comprising a popularity extrapolation module (24) operable to:
apply at least one key-word pattern from a key-word set pertaining to a product in the particular product category to words recorded in the additional data; and
determine a number of qualifying indicators of references to a brand of the product in a context directed to the particular product category based on application of the at least one key-word pattern for multiple products in the particular product category, the references indicative of brand popularity relative to the product category.

6. The system (10) of claim 1, further comprising a filtering module (158) operable to filter outlying results suggested by a key-word pattern out of a number of qualifying indicators.

7. The system (10) of claim 6, wherein:
the service provided by the external source is a search engine;
the additional data comprises data about search volumes for on-line searches; and
the popularity extrapolation module (24) derives the number of qualifying indicators from at least one of a search volume for a key-word pattern of the key-word set and at least one search volume for key words related to the key-word pattern.

8. The system (10) of claim 6, wherein the filtering module (158) is further operable to filter extraneous results out of a number of qualifying indicators by excluding at least one of search volumes above an upper threshold and search volumes below a lower threshold for purposes of determining the number of qualifying indicators.

9. The system (10) of claim 6, wherein:
the popularity extrapolation module (24) is operable to derive a qualifying indicator where key words from the key-word set are found within a predefined number of words among the words recorded in the additional data; and
the filtering module (158) is further operable to filter extraneous results out of a number of qualifying indicators by excluding instances where the key words are found outside the predefined number of words.

10. The system (10) of claim 9, wherein the additional data comprises a data set from at least one of a microblogging service, a social networking service, and a message board service.

11. The system of claim 1, further comprising a combination module (170) operable to combine qualifying indicators from multiple data subsets within the additional data by applying a weighting coefficient to qualifying indicators of a data subset, where one data subset differs from another.

12. A system (10) for ranking elements within a category by attribute popularity comprising:
a categorized data store (22) having categorized data structured to indicate that multiple elements, each with an attribute of interest, pertain to a category;
an additional data store (16) having additional data collected from an external source, the additional data recording words employed by users of a service provided by the external source;
a popularity-score assignment module (14) operable to communicate with the categorized data store and the additional data store to assign a popularity score to the attribute of interest of each of the multiple elements;
a key-word module (58) operable to assign a key-word set to the attribute of interest of individual elements of the multiple elements, a key-word set suggesting inclusion of a related element in the category;
a popularity extrapolation module (24) operable to apply at least one key word from a key-word set to the recorded words of the additional data to determine a number of qualifying indicators of references to the attribute of interest of an element in a context directed to the category for each of the multiple elements, the references indicative of a popularity of an attribute of interest, so that the popularity-score assignment module may assign popularity scores.

13. The system (10) of claim 12, further comprising a ranking module (18), the ranking module configured to rank the multiple elements according to a popularity-score assigned to the attribute of interest of individual elements of the multiple elements by the popularity-score assignment module (14).

14. The system (10) of claim 13, wherein:
the category is a product category;
an attribute of interest is a brand of products; and
an element is a product of a brand, product pertaining to the product category.

15. The system (10) of claim 13, wherein:
a key-word set comprises multiple key-word patterns associated with the attribute of interest of an element that pertains to the category;
key words in a key-word pattern stand in a relationship to one another defined by at least one of word order and Boolean logic; and
applying at least one key word from a key-word set to the recorded words of the additional data further comprises determining a number of qualifying indicators of references to the attribute of interest of the element in the context directed to the category based on instances of the key words within the key-word pattern standing in the relationship to one another.
